(19) Europäisches Patentamt
European Patent Office
Office européen des brevets

(11) Veröffentlichungsnummer: **0 053 183**
**B1**

(12) # EUROPÄISCHE PATENTSCHRIFT

(45) Veröffentlichungstag der Patentschrift: **12.12.84**

(51) Int. Cl.³: **D 21 H 5/10,** B 41 M 3/14, G 06 K 19/00, G 07 D 7/00

(21) Anmeldenummer: **81902059.5**

(22) Anmeldetag: **29.05.81**

(86) Internationale Anmeldenummer: **PCT/DE 81/00081**

(87) Internationale Veröffentlichungsnummer: **WO 81/03510 (10.12.81 Gazette 81/29)**

(54) **WERTPAPIER MIT ECHTHEITSMERKMALEN IN FORM VON NUR IM UNSICHTBAREN BEREICH DES OPTISCHEN SPEKTRUMS LUMINESZIERENDEN SUBSTANZEN UND VERFAHREN ZUR PRÜFUNG DERSELBEN.**

(30) Priorität: **30.05.80 DE 3020599**

(43) Veröffentlichungstag der Anmeldung: **09.06.82 Patentblatt 82/23**

(45) Bekanntmachung des Hinweises auf die Patenterteilung: **12.12.84 Patentblatt 84/50**

(84) Benannte Vertragsstaaten: **FR LU NL**

(56) Entgegenhaltungen:
**DE - A - 2 745 301**

**IBM Technical Disclosure Bulletin, volume 9, No. 7, published on 7 December 1966 (Armonk, New York USA) W.J. Fant et al.: "Infrared transparent credit card", see page 870**

(73) Patentinhaber: **GAO GESELLSCHAFT FÜR AUTOMATION UND ORGANISATION MBH, Euckenstrasse 12, D-8000 München 70 (DE)**

(72) Erfinder: **KAULE, Wittich, Germeringer Strasse 50, D-8035 Gauting (DE)**
Erfinder: **STENZEL, Gerhard, Schlessstättstrasse 5, Schlessstättstrasse 6 (DE)**

(74) Vertreter: **Kador . Klunker . Schmitt-Nilson . Hirsch, Corneliusstrasse 15, D-8000 München 5 (DE)**

**EP 0 053 183 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Wertpapier mit lumineszierenden Echtheitsmerkmalen sowie ein Verfahren zur Prüfung eines derartigen Wertpapiers.

Unter der Bezeichnung »Wertpapier« werden hier Banknoten, Scheckformulare, Aktien und Briefmarken sowie Ausweise, Kreditkarten, Scheckkarten, Pässe, Flugscheine und andere Urkunden und Dokumente verstanden. Um Fälschungen und Verfälschungen zu verhindern, wird seit langem versucht, schutzbedürftiges Wertpapier so auszubilden, daß Unbefugte dieses nicht unerkennbar abändern oder nachbilden können.

Dabei haben sich in der Vergangenheit besonders die Sicherungsmethoden bewährt, deren Merkmale einerseits von jedermann ohne technische Hilfsmittel und ohne besonderes Sachwissen eindeutig auf Echtheit geprüft werden können, die aber bei der Herstellung der Merkmale eine derart hohe handwerkliche Kunstfertigkeit erforderlich machen, daß der Fälscher nicht in der Lage ist, den Herstellungsprozeß fachmännisch nachzuvollziehen. Besonders bei Banknoten hat sich die Ausstattung mit echten Wasserzeichen und mit Sicherheitsfäden bewährt, weil diese nur während der Papierherstellung mittels aufwendiger Vorrichtungen vorgenommen werden kann. Echtheitsmerkmale von vergleichbarem Wert sind extrem feine und deshalb handwerklich sehr anspruchsvolle Stahltiefdruckmuster. Seit einiger Zeit ist im internationalen Zahlungsverkehr ein starker Trend zur Automation erkennbar. Dabei hat sich gezeigt, daß die bislang verwendeten Echtheitsmerkmale nicht im gleichen Maße für eine automatische Prüfung geeignet sind. Weil der Nachweisautomat das zur Prüfung vorgelegte Wertpapier nicht ganzheitlich erfaßt, ist er leichter durch Nachahmung zu täuschen als die menschlichen Sinne, für welche diese Merkmale konzipiert sind. Dadurch wurde es erforderlich, zusätzlich zu den genannten visuell prüfbaren Echtheitsmerkmalen weitere zu schaffen, die vom Prüfautomaten mit vergleichbarer Sicherheit erkannt werden können.

Eindrucksfälschungen werden daher weiter erschwert, wenn die für eine automatische Prüfung vorgesehenen Merkmale durch die menschlichen Sinne nicht erfaßt werden können.

In der Patentliteratur sind inzwischen zur automatengerechten Absicherung von Wertpapieren eine Reihe von optischen, elektrischen und magnetischen Merkmalen vorgeschlagen worden. Diese Echtheitskennzeichen eignen sich für die Prüfung in Vorrichtungen wie z. B. Geldausgabeautomaten; man kann diese Merkmale aber nicht vom Kunden unbemerkt und unauffällig am Bankschalter und bei vergleichbaren Gelegenheiten überprüfen.

Bei Wertpapieren mit magnetischen Sicherheitsfäden ist man, wie überhaupt bei magnetisch wirksamen Merkmalen gezwungen, das Dokument in der Nachweisapparatur genau zu positionieren und beidseitig einen engen Kontakt mit dem Magnetfelddetektor, wie z. B. einer Spule einem Magnetkopf, einem Tonkopf, einer Feldplatte oder dergleichen, herzustellen.

Aus den gleichen Gründen scheiden auch elektrisch leitende Einlagerungen oder Aufdrukke als Merkmal bei einer unauffälligen und schnellen Prüfung aus. Zudem genügt meist ein Bleistiftstrich zur Imitation eines derartigen Merkmals.

Es wurden bereits Wertpapiere mit optischen Echtheitsmerkmalen bekannt, bei deren automatischer Prüfung weder eine genaue Positionierung noch ein enger Kontakt mit der Prüfapparatur notwendig ist.

Bei einer ersten Gruppe derartiger Merkmale wird die lokale Absorption bei Wellenlängen des infraroten bzw. des ultravioletten Spektralbereiches geprüft; die Papiere werden deshalb durch geeignete Maßnahmen schon bei der Herstellung mit Durchlässigkeitsmustern ausgestattet. Wenn man nicht die Nachteile eines großflächigen Aufdrucks in Kauf nehmen möchte, dann muß man bei der Prüfung derartiger Wertpapiere eine aufwendige Mustererkennung vornehmen. Dadurch ist der Anwendungsbereich bereits stark eingeschränkt.

Eine erkannte derartige Markierung läßt sich mit Substanzen nachahmen, die ebenfalls im Handel erhältlich sind.

Bei einer zweiten Gruppe optischer Merkmale verwendet man die Fluoreszenzemission von Merkmalstoffen zum Echtheitsnachweis.

Die Absicherung von Wertpapieren gegen Fälschung mittels lumineszierender Substanzen ist schon seit langem bekannt. Bereits in der DE-C-449 133 aus dem Jahre 1925 und der DE-C-497 037 aus dem Jahre 1926 wird das Einbringen von lumineszierenden Substanzen in Wertpapiere beschrieben, wobei die dabei verwandten Luminophore mit ultravioletten oder anderen unsichtbaren Strahlen anregbar sind und im sichtbaren Bereich emittieren.

In den US-A-3 473 027 und 3 525 698 sind Luminophore und deren Verwendung als Codierfarben auf der Basis von mit Seltenerdmetallen dotierten Wirtsgittern, die gegebenenfalls coaktiviert sind, beschrieben, bei denen die Anregung im UV-Bereich und im kurzwelligen sichtbaren Bereich erfolgt und die Emission im nahen IR-Bereich zur Erweiterung des verwendbaren Spektralbereiches Verwendung finden.

In der DE-A 2 547 768 werden cododierte Seltenerdmetall-Luminophore beschrieben, welche im IR-Bereich angeregt werden und im sichtbaren Bereich emittieren.

Die Verwendung von Luminophoren zur Absicherung von Datenträgern wird ferner in der DE-A-1 599 011 beschrieben sowie in der DE-A-2 903 073, wobei die dort beschriebenen Leuchtstoffe im IR-Bereich angeregt werden.

In der Patentliteratur und der wissenschaftlichen Literatur wurde eine sehr große Anzahl ver

schiedener Seltenerdmetall-Luminophore beschrieben, die als Einkristalle für Festkörperlaser oder für andere Anwendungen geeignet sind. Beispielsweise kann auf die US-A-3 447 851 und 3 480 877 hingewiesen werden, in denen Kristalle mit Granatstruktur für die Lasertechnik beschrieben werden, jedoch die Absicherung von Wertpapieren mit Luminophoren nicht angesprochen ist.

Der Stand der Technik bezüglich der Absicherung von Wertpapieren mit lumineszierenden Substanzen läßt sich dahingehend zusammenfassen, daß die Anregung der Luminophore vorzugsweise im UV- oder im IR-Bereich erfolgt, während die Emission im sichtbaren Spektrum (VIS) entweder erwünscht ist oder als nicht störend angesehen wird.

Alle in der Literatur im Zusammenhang mit Wertpapier-Absicherung genannten Lumineszenz-Stoffe weisen auch zumindest zusätzlich Emission im VIS auf. Dadurch wird die Markierung bei entsprechender Anregung erkennbar; ferner emittieren alle im Zusammenhang mit Wertpapier-Absicherung bekannten IR-Luminophore in einem Spektralbereich, der mit handelsüblichen Bildwandlern untersucht werden kann.

Die Luminophore werden bei einschichtigen Wertpapieren als Papierzusätze, als Papiereinlagerungen, beispw. als Melierfasern oder Sicherheitsfäden oder Druckfarben eingesetzt.

Es hat sich herausgestellt, daß bei der Absicherung von Wertpapieren mit Seltenerdmetall-Luminophoren wegen der im folgenden beschriebenen Eigenschaften derselben Schwierigkeiten auftreten. In neueren Veröffentlichungen werden daher meist »Datenkarten«, d. h. im allgemeinen mehrschichtige Wertpapiere beschrieben, bei denen diese Schwierigkeiten umgangen werden können.

So beschreibt die DE-A-2 745 301 eine fluoreszenzkodierte Datenkarte. Die verwendeten Fluoreszenzstoffe werden mit IR-Licht angeregt und emittieren auch im IR; sie sind mit Lanthanidionen dotierte Wolframate, Phosphate, Fluoride und Molibdate. Als Wirtsgitter wird auch der reine YAG erwähnt. Alle diese Verbindungen sind transparent und dämpfen deshalb die parasitären Emissionen nicht. Die Verwendung ausschließlich transparenter Wirtsgitter ist aus der Entwicklung der Luminophorphysik verständlich. Insbesondere für Laser sowie für im Sichtbaren breitbandig emittierende Luminophore war man natürlich an transparenten Wirtsgittern interessiert, damit das Lumineszenzlicht nicht durch das eigene Wirtsgitter gedämpft wird. Die DE-A-2 745 301 greift also auf Luminophore des Standes der Technik zurück und versucht, die Lumineszenzkodierung durch Abdecken mit einer blauen Folie unsichtbar zu halten. Es ist offensichtlich, daß man dieses Verfahren z. B. bei Banknoten nicht anwenden kann und daß es ferner den Mangel aufweist, wegen der gefärbten Folie auf die Kodierung hinzuweisen.

Schwierigkeiten bei der Absicherung von Wertpapieren insbesondere bei der Druckfarbenabsicherung von Wertpapieren mit Seltenerdmetall-Luminophoren ergeben sich einmal durch deren Korngröße. In den bereits vorgenannten Druckschriften, nämlich der US-A-3 473 027 und der DE-A-2 547 768 werden Korngrößen von einigen µm aufwärts genannt. Für übliche Druckpigmente sind jedoch Korngrößen unter 1 µm erforderlich. Übliche bisher verwendete Seltenerdmetall-Luminophore weisen unter einer bestimmten Korngröße keine ausreichende Effektivität mehr auf, so daß sie beim Zerkleinern erheblich an Lumineszenzintensität verlieren. Sie müssen daher in großen Mengen eingesetzt werden; dies verursacht hohe Kosten und führt häufig zu nicht lösbaren technologischen Problemen, weil dazu die Grenze der Belastbarkeit der Druckfarbe mit Zusatzstoffen überschritten werden müßte.

Zur Umgehung dieser Schwierigkeiten bezüglich der Korngröße werden teilweise lösliche organische Seltenerdmetall-Luminophore beschrieben, die jedoch naturgemäß nicht die für den Banknotendruck erforderliche Lösungsmittelechtheit aufweisen.

Bei der Absicherung von Wertpapieren wurde bisher bevorzugt Wert darauf gelegt, daß bei Anregung im UV-Bereich oder IR-Bereich Lumineszenz im sichtbaren Bereich auftritt oder in dem mit handelsüblichen Bildwandlern leicht zugänglichen nahen IR-Bereich. Bei der automatischen Echtheitserkennung von Wertpapieren stellt es jedoch einen zusätzlichen Sicherheitsfaktor dar, wenn die Absicherung nicht sichtbar ist oder es nicht möglich ist, diese mit üblichen Hilfsmitteln sichtbar zu machen.

In der DE-A-1 599 011 wurde zur Tarnung von Beschriftungen bereits das Abdecken mit einer Folie vorgeschlagen. Abgesehen davon, daß die Folie selbst sichtbar ist und damit auf den Ort der Beschriftung besonders hinweist, ist die Anwendung von Folien bei Banknoten und ähnlichen Wertpapieren nicht praktikabel.

Aufgabe der Erfindung ist die Schaffung von Wertpapieren mit einer Absicherung in Form von lumineszierenden Substanzen, die möglichst schwer erkennbar sind und insbesondere keine Emission im sichtbaren Spektralbereich zeigen und deren Echtheit unauffällig, schnell und automatisch festgestellt werden kann.

Aufgabe der Erfindung ist es ferner, ein entsprechendes Prüfverfahren für die unauffällige, schnelle und automatische Echtheitsprüfung dieser Merkmale zu entwickeln.

Der Erfindung liegt die Erkenntnis zugrunde, daß diese Aufgabe dadurch gelöst werden kann, daß durch Kombination der Luminophore mit geeignet absorbierenden Stoffen alle Lumineszenzemissionen im sichtbaren Bereich des optischen Spektrums unterdrückt werden und daß die Prüfvorrichtung hinter einer undurchsichtigen Platte, die für die Anregungs- und Emissionsstrahlung durchlässig ist, verborgen wird. Diese Platte kann sowohl dunkel bzw. schwarz aussehen, als auch als Spiegel z. B. als farbiger Spiegel ausgeführt sein.

Gegenstand der Erfindung ist ein Wertpapier mit Echtheitskennzeichen in Form lumineszierender Substanzen, wobei die lumineszierenden Substanzen so ausgebildet sind, daß sie Lumineszenzemission nur im sichtbaren Bereich des optischen Spektrums zeigen, wobei die Anregung ebenfalls mit sichtbarem Licht vorgenommen werden kann.

Unter dem »unsichtbaren Bereich des optischen Spektrums« verstehen wir in Übereinstimmung mit der Fachliteratur den Wellenlängenbereich kleiner 400 nm und größer 750 nm.

Erfindungsgemäße Eigenschaften können beispielsweise durch Kombination eines Luminophors mit einem oder mehreren geeignet absorbierenden Stoffen oder durch die Verwendung von Seltenerdmetall-Luminophoren in geeignet absorbierenden Wirtsgittern erzielt werden.

Die besonderen Maßnahmen zur Unterdrückung sogenannter »parasitärer« Lumineszenzemission im Sichtbaren sind wesentlicher Bestandteil dieser Erfindung. Vorteilhafte Ausgestaltungen der Erfindung sind den Unteransprüchen zu entnehmen.

Hervorstechende Vorteile dieser Erfindung sind:

- Prüfsignal und Echtheitssignal haben keine Komponenten, die von den menschlichen Sinnen direkt erkannt werden können und die Prüfapparatur ist so ausgeführt, daß sie dem Betrachter auch während des Prüfvorgangs verborgen bleibt; die Prüfung des Wertpapiers kann deshalb in Gegenwart von Personen und trotzdem von diesen unbemerkt erfolgen.
- Die Nachahmung des Echtheitsmerkmals ist bei vielen dieser Stoffe sehr schwierig, bei einigen nahezu unmöglich.

Die Ausführungsmöglichkeiten des Merkmals können nach Anregung und Emission in 4 Gruppen eingeteilt werden.

### 1. Anregung UV — Emission UV

Eine Markierung von Wertpapieren mit Lumineszenzstoffen, die im UV angeregt werden und im UV emittieren, kann mit den an sich bekannten Schwarzlichtphosphoren — dotierten Erdalkaliphosphoren oder -silikaten oder -sulfaten — vorgenommen werden.

Geeignete Stoffe sind im einzelnen aufgeführt bei P. Pringsheim, M. Vogel: Lumineszenz von Flüssigkeiten und festen Körpern, Verlag Chemie, Weinheim 1951, Seite 209, Tab XXIIIb und Seite 202, Tab XXI, Pos. 5.

Als Beispiele nennen wir ferner:

Cer-aktiviertes Calziumphosphat
$Ca_3(PO_4)_2$: Ce oder
Blei-aktiviertes Barium-fluorsilikat
$BaFSiO_3$: Pb

Darüberhinaus gibt es noch eine Vielzahl organischer Lumineszenzstoffe, mit denen Wertpapier zu diesem Zweck ausgestattet werden kann.

Wir nennen hier Pyren und Naphtalin und verweisen im übrigen auf die Zusammenstellung weiterer geeigneter Stoffe bei: Landolt-Börnstein: Neue Serie II/3 (1967).

### 2. Anregung UV — Emission IR

Zur Kennzeichnung von Wertpapieren mit Lumineszenzstoffen, die nach Anregung mit UV im IR emittieren, verwendet man Ionen von Seltenerdmetallen, die in geeignete Wirtsgitter eingebaut sind. Derartige Wirtsgitter, wie z. B. Lanthanfluorid $LaF_3$, Lanthanchlorid $LaCl_3$ werden bis zu Konzentrationen von 5% und mehr mit Ionen von Seltenerdmetallen wie Praseodym, Neodym, Cer, Samarium, Europium, Terbium, Dysprosium, Holmium, Erbium, Thulium oder Ytterbium dotiert.

Wir verweisen im übrigen auf die Zusammenstellung weiterer geeigneter Stoffe bei: Dieke »Spektra & Enercy Levels of Rare Earth Ions in Crystals« Interscience N. Y. 1968, Kapitel 13, Seiten 189 ff.

### 3. Anregung IR — Emission UV

Grundsätzlich kann man Wertpapiere auch mit Lumineszenzstoffen kennzeichnen, die bei Anregung im IR eine Lumineszenzemission im UV zeigen. Für Wertpapiere, die starken Beanspruchungen ausgesetzt sind, z. B. Banknoten, hat diese Ausführungsform der Erfindung eingeschränkte Bedeutung, weil die Intensität der Lumineszenzemission relativ gering ist. Eine Anwendung ist nur in wenig beanspruchten Wertpapieren sinnvoll und erfordert verhältnismäßig aufwendige Prüfgeräte.

Für diese Ausführung der Erfindung geeignete Merkmalstoffe, die das ungewöhnliche Verhalten zeigen, energiereichere Strahlung als die eingestrahlte zu emittieren, sind die schon vorstehend angesprochenen Ionen von Seltenerdmetallen in Wirtsgittern. Das Wirtsgitter koppelt hier zwei absorbierte IR-Photonen auf das Seltenerdmetallion, welches seine Anregungsenergie dann durch Aussenden eines einzelnen UV-Photons wieder abgibt.

Geeignete Stoffe und deren Eigenschaften sind aufgeführt z. B. bei:
Auzel: Proceedings of the IEEE Vol 61, 6 (1973) p 769. Wir nennen als Beispiel Ytterbium-Erbium-dotiertes Yttriumoxichlorid $Y_2OCl_7 : Yb^{3+} : Er^{3+}$ mit UV-Emissionslinien bei 380, 320 und 305 nm bei Anregung im IR zwischen 950 und 1050 nm.

### 4. Anregung IR — Emission IR

Bei einschichtigen Dokumenten, z. B. bei Banknoten, bringt die Kennzeichnung mit Lumineszenzstoffen, die nach Einstrahlung von IR eine Lumineszenzemission im IR zeigen, augenfällige Vorteile. Sowohl das Papier als auch die bei der Wertpapierherstellung verwendeten Druckfarben besitzen im IR eine höhere Transmission als im UV. Dieser Vorteil wird verstärkt durch die hohe Effektivität der zur Verfügung stehenden Lichtquellen, welche zudem leichter zu handhaben sind als die entsprechenden UV-Lichtquellen.

Entsprechende Lumineszenzstoffe gibt es in großer Anzahl.

Geeignete organische Verbindungen sind in: Applied Phys. Letters, Vol 12, p 206 aufgeführt. Wir nennen als Beispiel: Kresylviolett®.

Geeignete anorganische Verbindungen sind wieder einige der bereits genannten Ionen von Seltenerdmetallen in organischen und anorganischen Wirtsgittern.

Die weitere Beschreibung der Erfindung kann für alle vier Ausführungsformen gemeinsam erfolgen.

Das Unterdrücken von nicht erwünschten Emissionen im sichtbaren Bereich kann durch Verwendung von absorbierenden Substanzen erfolgen, die in jenen Wellenlängenbereichen absorbieren, bei denen der Luminophor eine unerwünschte Emission aufweist. Für diesen Zweck eignen sich insbesondere Farbstoffe und Farbpigmente. Vorzugsweise werden die Luminophore eingebettet in die absorbierenden Substanzen.

Luminophor und absorbierende Substanzen können aber auch als Mischung auf oder in das Wertpapier gebracht werden.

Alternativ kann der Luminophor in Mischung einer absorbierenden Druckfarbe zugesetzt werden oder in das Papier eingebracht oder auf eine Sicherheitsfadenfolie aufgebracht werden. Der absorbierende Stoff kann ggf. in einem Firnis gelöst vorliegen.

Eine alternative Möglichkeit, nicht erwünschte Emissionen im VIS-Bereich zu unterdrücken, besteht in der Verwendung geeignet absorbierender Wirtsgitter für Seltenerdmetall-Luminophore.

Vorzugsweise weisen diese Wirtsgitter eine Perovskit- oder Granatstruktur auf.

Unter Perovskiten werden hier Verbindungen der allgemeinen Formel

$$AXO_3$$

verstanden, wobei

A Scandium, Yttrium, Lanthan, ein Lanthanid mit den Ordnungszahlen 58 bis 71 und/oder Wismut und

X ein oder mehrere absorbierende Übergangsmetalle, vorzugsweise Kobalt, Nickel, Mangan oder Eisen bedeuten.

Wie bereits erwähnt, kann das Wirtsgitter ein Mischgitter aus einem absorbierenden und einem nichtabsorbierenden Gitter gleicher Struktur sein, d. h. das absorbierende Übergangsmetall X kann teilweise durch andere Elemente ersetzt sein.

Insbesondere kommen in Frage dreiwertige Elemente, wie Aluminium, Gallium, Indium und Scandium sowie vierwertige zusammen mit zweiwertigen Elementen, wie Silizium oder Germanium mit Calcium, Magnesium und/oder Zink.

Als Granate werden hier insbesondere auch Verbindungen der nachstehend aufgeführten allgemeinen Formeln F1 bis F4 bezeichnet.

F1: $A_3X_{5-2x}M_xM'_xO_{12}$
F2: $A_{3-x}B_xX_{5-x}M_xO_{12}$
F3: $A_3Fe_{5-x}M_xO_{12}$
F4: $A_{3-2x}B_{2x}X_{5-x}V_xO_{12}$

Dabei bedeutet

A in allen Fällen:
Yttrium, Scandium, die Lanthaniden mit Ausnahme von Praseodym und Neodym. Letztgenannte Elemente können aber als Gemischbestandteile vorhanden sein. Als Gemischbestandteil kommen auch Wismut und Lanthan in Frage.

X in allen Fällen:
ein Element aus der Gruppe Eisen, Aluminium, Gallium und Indium,

M':
ein Element aus der Gruppe Silizium, Germanium, Zinn und Zirkonium,

M bei F1:
ein Element aus der Gruppe Eisen, Kobalt, Nickel, Mangan und Zink,

bei F2:
ein Element aus der Gruppe Silizium, Germanium, Zinn, Tellur, Zirkonium und Titan,

bei F3:
ein Element aus der Gruppe Aluminium, Gallium, Indium und Chrom,

B:
ein Element aus der Gruppe Magnesium, Kalzium, Strontium, Barium, Mangan, Zink und Kadmium.

Wie die Formeln F1, F2 und F4 ausweisen, ist die Bildung von »Mischgranaten« nicht nur auf den gegenseitigen Ersatz von Elementen der Oxidationsstufe 3 beschränkt. Bei F1 und F2 werden sowohl zweiwertige als auch vierwertige Elemente zusammen in das Gitter eingebaut, wobei durch die angegebene Stöchiometrie der notwendige Ladungsausgleich erzielt wird; bei F4 gilt gleiches für den Einbau von zweiwertigen und fünfwertigen Elementen; hingegen beschreibt F3 den Austausch von Eisen durch dreiwertige Elemente für die kein Ladungsausgleich erfolgen muß.

Der Index x kann Werte zwischen 0 und maximal 5 annehmen, wobei dieser Wert von der Stöchiometrie begrenzt wird und sichergestellt sein muß, daß ein absorbierender Bestandteil vorliegt. Bevorzugte Beispiele von Mischgranaten zu den Fällen F1 bis F4 sind:

zu F1: $Y_3Fe_4Ni_{0,5}Ge_{0,5}O_{12}$
zu F2: $Y_2CaFe_4SiO_{12}$
zu F3: $Y_3Fe_3Al_2O_{12}$
zu F4: $YCa_2Fe_4VO_{12}$

Es versteht sich von selbst, daß diese Gitter zum Erzielen von Lumineszenz noch mit den Ionen der Seltenerdmetalle dotiert werden müssen.

Eine weitere geeignete Gruppe von Verbindungen sind mit Seltenerdmetallen dotierte Ferrite, der allgemeinen Formel

$$M_{1-x}^{2+}M'^{3+}_{x}Fe_{x}^{2+}Fe_{2-x}^{3+}O_4$$

wobei M ein oder mehrere zweiwertige Metalle aus der Gruppe Indium, Cadmium, Kobalt, Mangan, Eisen, Nickel, Kupfer, Magnesium und M' für eine oder mehrere dreiwertige Lanthanide (Ordnungszahl 58—71) wie Ytterbium, Erbium, Thulium, Dysprosium, Holmium, Gadolinium oder Samarium steht. In diesem Fall ist zur Ladungskompensation das dreiwertige Eisen mehr oder weniger durch Eisen der Oxidationsstufe 2 ersetzt, der Index x kann Werte zwischen 0 und 1 annehmen.

Im Gegensatz zu Seltenerdmetall-Luminophoren mit transparenten Wirtsgittern welche diverse Anwendungen gefunden haben und weit verbreitet sind, ist die Anwendung von Seltenerdmetall-Luminophoren mit im VIS absorbierenden Wirtsgittern bisher nur für Laser vorgeschlagen worden.

Dieser Vorschlag fand jedoch keine technische Anwendung. Aus diesem Grund ist eine handelsübliche Verfügbarkeit der bei den erfindungsgemäßen Wertpapieren eingesetzten lumineszierenden Substanzen ausgeschlossen.

Bei üblichen »durchsichtigen«, d. h. gering absorbierenden kristallinen Seltenerdmetall-Luminophoren sind für eine effektive Anregung und Emission verhältnismäßig große Kristalle erforderlich.

Bei kleinen Korngrößen sinkt die Effektivität schnell ab und ist bei Korngrößen unter 1 µm auf unpraktikabel niedere Werte gesunken. Bei dem in den erfindungsgemäßen Wertpapieren eingesetzten stark absorbierenden Seltenerdmetall-Luminophoren erfolgt die Anregung von Hause aus nur in einer vergleichsweise dünnen Schicht. Das Zerkleinern der Kristalle unter 1 µm vermindert daher die Effektivität nicht. Die Luminophore können aufgrund ihrer geringen Korngröße in Simultandruck- und Stahltiefdruckfarben eingesetzt werden.

Es ist nicht erforderlich, daß das Wirtsgitter im gesamten sichtbaren Bereich vollständig absorbiert. Es genügt vielmehr, daß die Absorption in jenen Bereichen erfolgt, wo eine sichtbare oder ggf. im nahen IR gelegene Emission auftreten kann. Auch eine verringerte Absorption des Wirtsgitters in bestimmten Spektralbereichen ist ausreichend, solange sichergestellt ist, daß durch die Absorption des Wirtsgitters mögliche Emissionen vermieden werden. Die gewünschten Eigenschaften der Luminophore liegen jedenfalls dann vor, wenn im Sichtbaren keine Emissionen auftreten und damit die Absicherung »unsichtbar« ist bzw. mit handelsüblichen Geräten nicht beobachtet werden kann.

Deshalb kann das Wirtsgitter auch in der vorstehend beschriebenen Weise ein Mischgitter aus einem absorbierenden und einem nichtabsorbierenden Gitter gleicher Struktur sein, d. h. das absorbierende Übergangsmetall X kann teilweise durch andere Elemente ersetzt sein. Die Eigenschaften der Unterdrückung von Lumineszenz im sichtbaren Bereich und das den starken Lichtquellen angepaßte Anregungsspektrum bleiben erhalten.

Die Absorption des Stoffes wird geringer und dieser läßt sich auch als Zusatzstoff für hellere Farbtöne einsetzen. Die gegebenenfalls geringe Effektivität des weniger absorbierenden Luminophors wird durch die weniger störende Absorption des helleren Farbstoffes ausgeglichen. Dunkle Farben nehmen viel Anregungslicht weg, d. h. man braucht zur Absicherung derselben sehr effektive, stark absorbierende, dunkle Luminophore.

Die aktiven Dotierungen sind Seltenerdmetalle mit den Ordnungszahlen 58 bis 71, die Emissionslinien im UV- oder IR-Bereich haben. Bevorzugte Dotierungen sind einzelne oder mehrere der Stoffe Erbium, Holmium, Thulium, Dysprosium.

Wenn das Wertpapier einschichtig ausgeführt ist, z. B. als Banknote, dann kann der Lumineszenzstoff durch Beigabe zur Pulpe einverleibt werden, wenn andererseits ein mehrschichtiges Laminat als Wertpapier vorliegt, z. B. als Kreditkarte, dann kann der Merkmalstoff durch die Verwendung eines bei der Herstellung präparierten Papiers als innere Schicht des Laminats eingebracht werden; eine weitere Möglichkeit ist das Einbringen des Lumineszenzstoffes zwischen zwei Laminatschichten.

Für das Auftragen des Lumineszenzstoffes auf die Oberfläche des fertigen Dokuments eignen sich bekannte Druckverfahren, z. B. Offsetdruck, Buchdruck, Stahldruck und Siebdruck.

Bevorzugt werden bei den erfindungsgemäßen Wertpapieren lumineszierende Substanzen eingesetzt, die lösungsmittelecht sind und allen bezüglich Banknotenfarben vorgeschriebenen Beständigkeitsprüfungen entsprechen. Bei weniger hohen Ansprüchen an die Beständigkeit können aber natürlich auch andere Stoffe, die nicht alle diese bei der Banknotenherstellung üblichen Anforderungen erfüllen, verwendet werden.

Wertpapier nach dieser Erfindung ist gegen Fälschungen in hohem Maße gesichert; dabei hängt der Grad der Sicherheit von der speziellen Wahl des Lumineszenzstoffes ab. Bei entsprechendem Aufwand kann eine Fälschung beliebig erschwert werden.

Die stark eingeschränkte Verfügbarkeit des ausgewählten Stoffes ist dabei nicht allein ausschlaggebend. Die hohe Quantenausbeute der verwendbaren Lumineszenzstoffe erlaubt es,

den Merkmalstoff in so geringen Maßen anzuwenden, daß eine chemische Analyse zur Identifizierung nur mit aufwendigen Geräten, z. B. mit Massenspektrometern, vorgenommen werden kann.

Erfindungsgemäßes Wertpapier sendet nach Anregung durch ein unsichtbares optisches Prüfsignal ein ebenfalls unsichtbares optisches Echtheitssignal aus. Weil sichtbares Licht nicht stört, kann die Prüfung unter Raumlicht vorgenommen werden.

In vielen Anwendungsfällen ist es vorteilhaft die Prüfung in Gegenwart von Personen aber von diesen unbemerkt durchzuführen. Dann ist es naheliegend auch die Prüfvorrichtung unsichtbar auszuführen.

Dies gelingt, wenn man dieselbe hinter einer undurchsichtigen Platte verbirgt, welche gleichwohl für das unsichtbare Prüfsignal sowie für das ebenfalls unsichtbare Echtheitssignal durchlässig ist.

Solche Platten können auf zweierlei Weise realisiert werden, durch absorbierende und auch durch reflektierende, insbesondere spiegelnde Materialien.

Beispiele für geeignet absorbierendes Material sind Woodsche Gläser, Anlaufgläser, dichroitisches Material, Germaniumscheiben, Siliziumscheiben und Kunststoffolien bzw. Kunststoffplatten, die geeignet absorbierendes Material als Füllstoff enthalten. Beispiele für geeignet reflektierende bzw. spiegelnde undurchsichtige Platten sind Interferenzfilter, Kaltlichtspiegel und polierte Germanium- bzw. Siliziumscheiben.

Die Positionierung des Wertpapiers im Prüfgerät ist unkritisch, da im allgemeinen keine Mustererkennung vorgenommen werden muß. Damit sind die Voraussetzungen für eine unauffällige automatische Prüfung gegeben.

Die weitere Beschreibung der Erfindung wird durch Figuren veranschaulicht. Es zeigt

Fig. 1 die schematische Zeichnung eines erfindungsgemäßen Prüfgeräts,

Fig. 2 die schematische Zeichnung einer weiteren Ausführung eines erfindungsgemäßen Prüfgeräts.

Eine geeignete Prüfvorrichtung ist in Fig. 1 schematisch dargestellt: Sie kann zur Echtheitskontrolle von erfindungsgemäßen Wertpapieren in allen Ausführungsformen herangezogen werden. Das Wertpapier 1 liegt dabei auf einer undurchsichtigen schwarzen oder spiegelnden Platte 2, welche — z. B. am Bankschalter als Zählmulde oder als Träger einer Reklameschrift — unauffällig in die Tischplatte eingelassen ist. Die Positionierung des Wertpapiers und sein Abstand von der Platte sind nicht kritisch, da der Toleranzbereich in der Größenordnung von cm liegt.

Die Platte 2 absorbiert im sichtbaren Bereich vollständig, ist aber sowohl für das unsichtbare Prüflicht, als auch für das unsichtbare die Echtheit anzeigende, Lumineszenzlicht durchlässig. Unter dem in das Prüfgerät eingeführten Wertpapier 1, und von diesem durch die Platte 2 getrennt, liegt der Lampenbereich 11. Das Prüflicht wird dort von der Lichtquelle 3 erzeugt und durch das Filter 4 spektral begrenzt. Dabei tritt es durch die Beleuchtungsoptik 5, durchsetzt Strahlteiler 6 und undurchsichtige Platte 2 und fällt dann auf das Wertpapier 1. Wenn das Dokument echt ist und die charakteristischen Lumineszenzstoffe enthält, sendet es Lumineszenzlicht mit bestimmter spektraler Verteilung aus. Das ausgesandte Licht tritt wieder durch die Platte 2 und fällt auf den Strahlteiler 6.

Das vom Wertpapier 1 in den Detektorbereich 7 ausgestrahlte Lumineszenzlicht durchsetzt die Detektoroptik, welche das Lumineszenzlicht auf die aktive Fläche des Detektors 9 fokussiert. Vor Detektoroptik 8 und Detektor 9 ist ein Detektorfilter 10 in den Strahlengang gebracht; es sorgt dafür, daß Streulicht von der Lichtquelle 3 nicht auf den Detektor 9 fallen kann. Das Filter 10 ist so ausgebildet, daß es nur für die Lumineszenz des Merkmalstoffes charakteristische Wellenlängen durchläßt. Der Detektor 9 erhält deshalb nur Licht, wenn das zu prüfende Wertpapier die erwarteten Echtheitsmerkmale aufweist. In diesem Fall wird über eine geeignete elektrische Schaltung ein Signalgeber aktiviert, der ein für den Kunden nicht, für den Schalterbeamten jedoch gut erkennbares vorzugsweise optisches Signal aussendet. Je nach Anwendungszweck kann man wählen, ob das Signal bei positivem oder bei negativem Ausgang der Prüfung gesendet wird.

Fig. 2 zeigt im Schema ein Prüfgerät in einer anderen einfacheren Ausführung, bei der man ohne Strahlteiler auskommt. Dafür muß man allerdings ein Prüfsignal in Kauf nehmen, welches vom Abstand des Wertpapiers von der Schwarzglasplatte abhängt.

Die bisher beschriebenen Prüfvorrichtungen identifizieren bestimmte Lumineszenzstoffe mit hoher Sicherheit und zeichnen sich dabei durch eine einfache Konstruktion aus. Stellt man sehr hohe Ansprüche an die Identifizierung des Merkmalstoffes, so kann die Prüfvorrichtung auch diesen Bedürfnissen angepaßt werden.

Dabei wird der grundsätzliche Aufbau der Prüfvorrichtung — Schwarzglasplatte, Strahlteiler, Beleuchtungsbereich und Detektorbereich zu beiden Seiten des Strahlteilers — beibehalten. Die Änderung beschränkt sich auf die Ausführung der Beleuchtungskammer 11 und der Auswerteelektronik. Diese Teile werden so ausgeführt, wie es die DE-A-2 645 959 der gleichen Anmelderin lehrt.

Die Strahlung der Lichtquelle wird durch eine rotierende Scheibe geschickt, welche mit zweierlei Filtern bestückt ist. Graufilter wechseln mit Filtern ab, welche den Merkmalstoff enthalten und deshalb das Prüflicht stoffspezifisch stark dämpfen. Je nachdem ob sich das Graufilter oder das auf den echten Stoff abgestimmte Spezialfilter im Strahlengang befindet und je nachdem ob ein »echter« oder ein »falscher« Lumineszenzstoff zur Prüfung vorliegt, emittiert die Probe Lumineszenzlicht entsprechender Intensität. Daraus kann mit Hilfe der in der DE-A-2 645 959 beschriebenen Auswerteelektronik die außerordentliche sichere Identifizierung eines bestimmten Merkmalstoffes vorgenommen werden.

Die im Prüfgerät zu verwendeten Filter und Lichtquellen müssen natürlich auf die Merkmalstoffe abgestimmt werden. Eine Anleitung, wie dies für die verschiedenen Stoffgruppen geschehen kann, weist Tabelle 1 aus.

Sowohl das Merkmal selbst als auch die Nachweisapparatur im Sinne dieser Erfindung lassen sich, wie aufgezeigt wurde, in weiten Grenzen an spezielle Anforderungen anpassen, die von Fall zu Fall an die Echtheitssicherung von Wertpapier gestellt werden und ermöglichen so problemgemäße und ökonomische Lösungen.

Selbstverständlich können außer den hier beschriebenen neuartigen Nachweisapparaturen auch alle bekannten Verfahren zum Nachweis sichtbarer Lumineszenz in abgewandelter Form Verwendung finden.

Geeignete Luminophore für die erfindungsgemäßen Wertpapiere und ihre Herstellung werden nachstehend anhand von Beispielen näher beschrieben.

## Beispiel 1

Herstellung eines Erbium-dotierten Mischgranats der Formel $Y_{2,8}Fe_4InO_{12} : Er_{0,2}$. Als Beispiel für einen erfindungsgemäßen Seltenerdmetall-Luminophor mit im VIS absorbierenden Wirtsgitter.

63,22 g Yttriumoxid $Y_2O_3$, 7,65 g Erbiumoxid $Er_2O_3$, 64 g Eisenoxid $Fe_2O_3$, 27,76 g Indiumoxid $In_2O_3$, 60 g entwässertes Natriumsulfat $Na_2SO_4$ werden innig vermischt, im Aluminiumtiegel 6 Stunden auf 840° C erhitzt, erneut vermahlen und weitere 14 Stunden auf 1100° erhitzt.

Nach dem Abkühlen wird das Reaktionsprodukt zerkleinert, mit Wasser das Flußmittel herausgewaschen und bei 100° C an Luft getrocknet. Zur Erzielung einer möglichst hohen Kornfeinheit wird das Pulver anschließend in einer Rührwerkskugelmühle vermahlen. Man erhält ein hellgrünes Pulver mit einer mittleren Korngröße kleiner als 1 µm.

Bei beliebiger Anregung zeigt dieser Luminophor, der ein aus Fig. 3 ersichtliches Anregungsspektrum aufweist keinerlei Lumineszenz im sichtbaren Bereich, jedoch bei Anregung gemäß Fig. 3 eine Emission, deren spektrale Verteilung durch Fig. 4 wiedergegeben ist und die gekennzeichnet ist durch eine starke Lumineszenz bei etwa 1,5 µm im IR-Bereich, wo das Wirtsgitter optisch transparent ist. Der Luminophor eignet sich deshalb hervorragend für eine unsichtbare und unauffällig prüfbare Echtheitserkennung von Wertpapier.

Demgegenüber zeigen alle üblichen mit Erbium dotierten Luminophore mit transparentem Wirtsgitter eine grüne Lumineszenz bei 0,52 bis 0,55 µm. Bei den erfindungsgemäß verwendeten Luminophoren tritt diese grüne Lumineszenz wegen der im sichtbaren Bereich absorbierenden Wirtsgitter nicht auf. Die verbleibende Infrarot-Lumineszenz bei etwa 1,5 µm ist intensiver als bei üblichen transparenten Wirtsgittern. Diese Fluoreszenz liegt auch außerhalb des mit handelsüblichen Bildwandlern zugänglich nahen IR-Bereichs.

## Beispiel 2

Herstellung von Thulium-aktiviertem Yttriumvanadat der Formel $Y_{0,95}Tm_{0,05}VO_4$ als Beispiel für einen mit einer geeignet absorbierenden Substanz ummantelten Luminophor mit erfindungsgemäßen Eigenschaften.

215 g Yttriumoxid $Y_2O_3$ wurde innig mit 19,3 g Thuliumoxid $Tm_2O_3$ und 234 g Ammoniummetavanadat $NH_4VO_3$ gemischt und die erhaltene Mischung an Luft 2 Stunden auf 800° C erhitzt.

Das Produkt wurde auf eine Teilchengröße von 2 µm gemahlen.

Der Luminophor zeigt starke schmalbandige Emissionen bei 480 nm und 800 nm.

Dieser Luminophor wurde anschließend in ein mit Permanentrot®R extra gefärbtes Kunstharz eingebettet. Dazu wurden 8 g des Luminophors mit 60 G Isophorondiisocyanat, 34 g Toluolsulfonamid und 20 g Melamin in einem beheizbaren Kneter bei 140° C gemischt, wobei durch exotherme Reaktion unter Temperatursteigerung auf 200° C ein spröder Festkörper entstand. Das Produkt wurde noch weitere 30 Minuten bei 180° C auspolymerisiert und anschließend vermahlen.

In Fig. 5 ist das Remissionsspektrum des Farbstoffes »Permanentrot R extra« (Warenzeichen der Firma Hoechst AG) wiedergegeben. Es sind auch die schmalbandigen Emissionen des Luminophors eingezeichnet. Durch die Kombination von Luminophor und Farbstoff wird die Emission bei 480 nm unterdrückt und es ist lediglich die Emission bei 800 nm beobachtbar.

Es bereitet dem Fachmann keine Schwierigkeiten, auf der Grundlage der vorstehenden Beschreibung weitere Rezepturen zur Herstellung von erfindungsgemäßen lumineszierenden Substanzen anzugeben.

## Patentansprüche

1. Wertpapier mit Echtheitskennzeichen in Form von lumineszierenden und absorbierenden Substanzen, die mit unsichtbarem und/oder sichtbarem Licht angeregt, ausschließlich im unsichtbaren Bereich des optischen Spektrums lumineszieren, dadurch gekennzeichnet, daß die absorbierenden Substanzen Farbstoffe oder Pigmente sind, die den lumineszierenden Substanzen beigemischt sind oder daß die absorbierenden Substanzen von Wirtsgittern dotierter Luminophore gebildet sind, wobei das Absorptionsspektrum der absorbierenden Substanzen das

Emissionsspektrum der lumineszierenden Substanzen im sichtbaren Bereich des optischen Spektrums überdeckt.

2. Wertpapier nach Anspruch 1, dadurch gekennzeichnet, daß die absorbierenden Substanzen die lumineszierenden Substanzen ummanteln.

3. Wertpapier nach einem der Ansprüche 1 bis 2, dadurch gekennzeichnet, daß die lumineszierenden Substanzen ein breitbandiges Emissionsspektrum besitzen.

4. Wertpapier nach Anspruch 3, dadurch gekennzeichnet, daß die lumineszierenden Substanzen organische Verbindungen sind.

5. Wertpapier nach Anspruch 1, dadurch gekennzeichnet, daß das Wirtsgitter als im sichtbaren Spektralbereich absorbierendes Element ein Metall der Nebengruppen VI, VII oder VIII enthält.

6. Wertpapier nach Anspruch 5, dadurch gekennzeichnet, daß das Wirtsgitter eine Granat-, eine Perowskit- oder eine Ferritstruktur aufweist.

7. Wertpapier nach Anspruch 6, dadurch gekennzeichnet, daß das Wirtsgitter eine Perowskitstruktur nach der allgemeinen Formel $AXO_3$ aufweist, wobei

A Wismut und/oder ein Seltenerdmetall und
X ein oder mehrere absorbierende Übergangsmetalle, vorzugsweise Kobalt, Nickel, Mangan oder Eisen bedeuten.

8. Wertpapier nach Anspruch 6, dadurch gekennzeichnet, daß sich die Granatstruktur durch die allgemeine Formel

$$A_3X_{5-2x}M_xM'_xO_{12}$$

beschreiben läßt, wobei

A Yttrium, Scandium, die Lanthanide mit Ausnahme von Neodym, Praseodym sowie deren Gemische untereinander sowie mit Neodym, Praseodym, Lanthan und Wismut,
X ein Metall aus der Gruppe Eisen, Aluminium, Gallium und Indium,
M ein Metall aus der Gruppe Eisen, Kobalt, Nickel, Mangan und Zink,
M ein Element aus der Gruppe Silizium, Germanium, Zinn und Zirkonium

bedeutet und der Index x die Bedingung $0 < x \leq 2{,}5$ erfüllt.

9. Wertpapier nach Anspruch 6, dadurch gekennzeichnet, daß sich die Granatstruktur durch die allgemeine Formel

$$A_{3-x}X_{5-x}B_xM_xO_{12}$$

beschreiben läßt, wobei

A Yttrium, Scandium, die Lanthanide mit Ausnahme von Neodym, Praseodym sowie deren Gemische untereinander sowie mit Lanthan, Praseodym, Neodym und Wismut,
B ein Element aus der Gruppe Magnesium, Kalzium, Strontium, Barium, Mangan, Zink und Kadmium,
X ein Metall aus der Gruppe Eisen, Aluminium, Gallium und Indium,
M ein Element aus der Gruppe Silizium, Germanium, Zinn, Tellur, Zirkonium und Titan

bedeutet und der Index x die Bedingung $0 < x \leq 3$ erfüllt.

10. Wertpapier nach Anspruch 6, dadurch gekennzeichnet, daß sich die Granatstruktur durch die allgemeine Formel

$$A_3Fe_{5-x}M_xO_{12}$$

beschreiben läßt, wobei

A Yttrium, Scandium, die Lanthanide mit Ausnahme von Neodym, Praseodym sowie deren Gemische untereinander sowie mit Neodym, Praseodym, Lanthan und Wismut,
M ein Metall aus der Gruppe Aluminium, Gallium, Indium und Chrom bedeutet und der Index x die Bedingung $0 \leq x < 5$ erfüllt.

11. Wertpapier nach Anspruch 6, dadurch gekennzeichnet, daß sich die Granatstruktur durch die allgemeine Formel

$$A_{3-2x}B_{2x}X_{5-x}V_xO_{12}$$

beschreiben läßt, wobei

A Yttrium, Scandium, die Lanthanide mit Ausnahme von Neodym, Praseodym sowie deren Gemische untereinander sowie mit Neodym, Praseodym, Lanthan und Wismut,
B ein Element aus der Gruppe Magnesium, Kalzium, Strontium und Barium,
X ein Element aus der Gruppe Aluminium, Gallium, Indium und Eisen

bedeutet und der Index x die Bedingung $0 < x \leq 1{,}5$ erfüllt annehmen kann.

12. Wertpapier nach Anspruch 6, dadurch gekennzeichnet, daß das Wirtsgitter eine Ferritstruktur nach der allgemeinen Formel

$$M_{1-x}^{2+}M'^{3+}_xFe_x^{2+}Fe_{2-x}^{3+}O_4$$

aufweist, wobei

M ein oder mehrere zweiwertige Metalle aus der Gruppe Indium, Kadmium, Kobalt, Mangan, Eisen, Nickel, Kupfer oder Magnesium bezeichnet und
M' für ein oder mehrere dreiwertige Lanthanide (Ordnungszahl 58—71) steht und

der Index x Werte zwischen 0 und 1 annehmen kann.

13. Wertpapier nach einem oder mehreren der vorstehenden Ansprüche, dadurch gekennzeichnet, daß die lumineszierenden Substanzen im visuellen Bereich unsichtbar und großflächig auf/ in dem Wertpapier vorgesehen sind.

14. Wertpapier nach einem oder mehreren der vorstehenden Ansprüche, dadurch gekennzeichnet, daß die lumineszierende Substanz bei Anregung mit ultraviolettem Licht im ultravioletten Bereich des optischen Spektrums lumineszíert.

15. Wertpapier nach einem oder mehreren der vorstehenden Ansprüche, dadurch gekennzeichnet, daß die lumineszierende Substanz bei Anregung mit infrarotem Licht im ultravioletten Bereich des optischen Spektrums lumineszíert.

16. Prüfverfahren zur unauffälligen Echtheitsprüfung von mit lumineszierenden Substanzen abgesicherten Wertpapieren nach Anspruch 1—15, dadurch gekennzeichnet, daß das Wertpapier durch eine Beleuchtungseinheit mit Licht aus dem unsichtbaren Bereich des optischen Spektrums angeregt wird und daß das emittierte Lumineszenzlicht aus dem unsichtbaren Bereich des optischen Spektrums in einer Detektoreinheit nach Wellenlängen und/oder Relexationszeit ausgewertet wird, wobei zwischen Beleuchtungseinheit und Detektoreinheit einerseits und Wertpapier andererseits eine undurchsichtig erscheinende Platte gebracht ist, welche sowohl Anregungslicht als auch Lumineszenzlicht hindurchtreten läßt.

17. Prüfverfahren nach Anspruch 16, dadurch gekennzeichnet, daß zur Anregung der lumineszierenden Substanzen UV-Licht verwendet wird und die Detektoreinheit nur Licht aus dem ultravioletten Bereich des optischen Spektrums auswertet.

18. Prüfverfahren nach Anspruch 17, dadurch gekennzeichnet, daß zur Anregung der lumineszierenden Substanzen UV-Licht verwendet wird und die Detektoreinheit nur Licht aus dem infraroten Bereich des optischen Spektrums auswertet.

19. Prüfverfahren nach Anspruch 16, dadurch gekennzeichnet, daß zur Anregung der lumineszierenden Substanzen IR-Licht verwendet wird und die Detektoreinheit nur Licht aus dem ultravioletten Bereich des optischen Spektrums auswertet.

20. Vorrichtung zur Durchführung eines Prüfverfahrens nach Anspruch 16 bis 19, dadurch gekennzeichnet, daß die undurchsichtige Platte das sichtbare Licht im wesentlichen nicht reflektiert und diese schwarz oder nahezu schwarz aussieht.

21. Vorrichtung nach Anspruch 20, dadurch gekennzeichnet, daß die undurchsichtige Platte aus einem Anlaufglas gefertigt ist, dessen Absorptionskante außerhalb des sichtbaren Bereichs des optischen Spektrums liegt.

22. Vorrichtung nach Anspruch 20, dadurch gekennzeichnet, daß die undurchsichtige Platte aus einem Woodschen Glas gefertigt ist.

23. Vorrichtung nach Anspruch 20, dadurch gekennzeichnet, daß die undurchsichtige Platte aus dichroitischem Material hergestellt ist.

24. Vorrichtung nach Anspruch 20, dadurch gekennzeichnet, daß die undurchsichtige Platte als eine Kunststoffolie oder Kunststoffplatte ausgeführt ist, welche geeignet absorbierendes Material als Füllstoff enthält.

25. Vorrichtung zur Durchführung eines Prüfverfahrens nach Anspruch 16 bis 19, dadurch gekennzeichnet, daß die undurchsichtige Platte das sichtbare Licht stark reflektiert, insbesondere spiegelt.

26. Vorrichtung nach Anspruch 25, dadurch gekennzeichnet, daß die undurchsichtige Platte aus Halbleitermaterial wie Silizium oder Germanium besteht.

27. Vorrichtung nach Anspruch 25, dadurch gekennzeichnet, daß die undurchsichtige Platte ein Kaltlichtspiegel ist.

28.Vorrichtung nach Anspruch 25, dadurch gekennzeichnet, daß die undurchsichtige Platte ein Interferenzfilter ist.

## Claims

1. A security paper with authenticity features in the form of luminescent and absorbent substances which, when excited by invisible and/or visible light, luminesce exclusively in the invisible range of the optical spectrum, characterized in that the absorbent substances are dyes or pigments which are mixed in with the luminescent substances or that the absorbent substances are formed by host lattices of doped luminophores, the absorption spectrum of the absorbent substances covering the emission spectrum of the luminescent substances in the visible range of the optical spectrum.

2. A security paper as in claim 1, characterized in that the absorbent substances coat the luminescent substances.

3. A security paper as in either of claims 1 and 2, characterized in that the luminescent substances possess a wide-band emission spectrum.

4. A security paper as in claim 3, characterized in that the luminescent substances are organic compounds.

5. A security paper as in claim 1, characterized in that the host lattice contains a metal of the subgroups VI, VII or VIII as an element which absorbs in the visible spectral range.

6. A security paper as in claim 5, characterized in that the host lattice has a garnet, perovskite or ferrite structure.

7. A security paper as in claim 6, characterized in that the host lattice has a perovskite structure according to the general formula $AXO_3$, wherein

A stands for bismuth and/or a rare earth metal and

X stands for one or more absorbent transition metals, preferably cobalt, nickel, manganese or iron.

8. A security paper as in claim 6, characterized in that the garnet structure can be described by the general formula

$A_3X_{5-2x}M_xM'_xO_{12}$

wherein

A stands for yttrium, scandium, the lanthanides with the exception of neodymium, praseodymium as well as mixtures thereof and with neodymium, praseodymium, lanthanum and bismuth,
X stands for a metal belonging to the group of iron, aluminum, gallium and indium,
M stands for a metal belonging to the group of iron, cobalt, nickel, manganese and zinc,
M' stands for an element belonging to the group of silicon, germanium, tin and zirconium,

and the index x fulfils the condition $0 < x \leq 2.5$.

9. A security paper as in claim 6, characterized in that the garnet structure can be described by the general formula

$A_{3-x}X_{5-x}B_xM_xO_{12}$

wherein

A stands for yttrium, scandium, the lanthanides with the exception of neodymium, praseodymium as well as mixtures thereof and with lanthanum, praseodymium, neodymium and bismuth,
B is an element belonging to the group of magnesium, calcium, strontium, barium, manganese, zinc and cadmium,
X is a metal belonging to the group of iron, aluminum, gallium and indium,
M is an element belonging to the group of silicon, germanium, tin, tellurium, zirconium and titanium,

and the index x fulfils the condition $0 < x \leq 3$.

10. A security paper as in claim 6, characterized in that the garnet structure can be described by the general formula

$A_3Fe_{5-x}M_xO_{12}$

wherein

A stands for yttrium, scandium, the lanthanides with the exception of neodymium, praseodymium as well as mixtures thereof and with neodymium, praseodymium, lanthanum and bismuth,
M stands for a metal belonging to the group of aluminum, gallium, indium and chromium and the index x fulfils the condition $0 \leq x < 5$.

11. A security paper as in claim 6, characterized in that the garnet structure can be described by the general formula

$A_{3-2x}B_{2x}X_{5-x}V_xO_{12}$

wherein

A stands for yttrium, scandium, the lanthanides with the exception of neodymium, praseodymium as well as mixtures thereof and with neodymium, praseodymium, lanthanum and bismuth,
B stands for an element belonging to the group of magnesium, calcium, strontium and barium,
X stands for an element belonging to the group of aluminium, gallium, indium and iron

and the index x may assume the condition $0 < x \leq 1.5$.

12. A security paper as in claim 6, characterized in that the host lattice has a ferrite structure according to the general formula

$M_{1-x}^{2+}M'^{3+}_xFe_x^{2+}Fe_{2-x}^{3+}O_4$

wherein

M stands for one or more bivalent metals belonging to the group of indium, cadmium, cobalt, manganese, iron, nickel, copper or magnesium and
M' stands for one or more trivalent lanthanides (atomic number 58—71) and

the index x can assume values between 0 and 1.

13. A security paper as in one or more of the above claims, characterized in that the luminescent substances are invisible in the visual range and are provided over a large area on/in the security paper.

14. A security paper an in one or more of the above claims, characterized in that the luminescent substance, when excited by ultraviolett light, luminesces in the ultraviolet range of the optical spectrum.

15. A security paper as in one or more of the above claims, characterized in that the luminescent substance, when excited by infrared light, luminesces in the ultraviolet range of the optical spectrum.

16. A testing method for inconspicuously authenticating security papers protected by luminescent substances as in claims 1 to 15, characterized in that the security paper is excited by light from the invisible range of the optical spectrum emitted by a lighting unit, and that the emitted luminescent light from the invisible range of the optical spectrum is evaluated as to its wavelength and/or relaxation time in a detector unit, a plate which appears to be opaque but allows both the excitation light and the luminescent light to pass through being provided between the lighting unit and the detector unit, on the one hand, and the security paper, on the other hand.

17. A testing method as in claim 16, characterized in that UV light is used to excite the luminescent substances and the detector unit only evaluates light from the ultraviolet range of the optical

spectrum.

18. A testing method as in claim 17, characterized in that UV light is used to excite the luminescent substances and the detector unit only evaluates light from the infrared range of the optical spectrum.

19. A testing method as in claim 16, characterized in that IR light is used to excite the luminescent substances and the detector unit only evaluates light from the ultraviolet range of the optical spectrum.

20. An apparatus for carrying out a testing method as in claims 16 to 19, characterized in that the opaque plate essentially does not reflect the visible light and looks black or practically black.

21. An apparatus as in claim 20, characterized in that the opaque plate is made of tempering glass whose absorption edge is outside the visible range of the optical spectrum.

22. An apparatus as in claim 20, characterized in that the opaque plate is made of Wood's glass.

23. An apparatus as in claim 20, characterized in that the opaque plate is made of dichroitic material.

24. An apparatus as in claim 20, characterized in that the opaque plate is designed as a synthetic film or synthetic plate containing suitably absorbent material as a filler.

25. An apparatus for carrying out a testing method as in claims 16 to 19, characterized in that the opaque plate greatly reflects, in particular directly reflects, the visible light.

26. An apparatus as in claim 25, characterized in that the opaque plate is made of semiconductor material such as silicon or germanium.

27. An apparatus as in claim 25, characterized in that the opaque plate is a cold-light mirror.

28. An apparatus as in claim 25, characterized in that the opaque plate is an interference filter.

**Revendications**

1. Papier valeur avec caractéristiques d'authenticité sous forme de substances luminescentes et absorbantes, qui, en étant activées par une lumière invisible et/ou visible, produisent une luminescence exclusivement dans le domaine invisible du spectre optique, caractérisé en ce que les substances absorbantes sont des colorants ou des pigments qui sont mélangés aux substances luminescentes ou bien en ce que les substances absorbantes sont constituées par des luminophores dotés de réseaux insérés, le spectre d'absorption des substances absorbantes recouvrant le spectre d'émission des substances luminescentes dans le domaine visible du spectre optique.

2. Papier valeur selon la revendication 1, caractérisé en ce que les substances absorbantes enveloppent les substances luminescentes.

3. Papier valeur selon une des revendication 1 à 2, caractérisé en ce que les substances luminescentes présentent un spectre d'émission à large bande.

4. Papier valeur selon la revendication 3, caractérisé en ce que les substances luminescentes sont des composés organiques.

5. Papier valeur selon la revendication 1, caractérisé en ce que le réseau inséré contient, comme élément d'absorption dans le domaine spectral visible, un métal des groupes secondaires VI, VII ou VIII.

6. Papier valeur selon la revendication 5, caractérisé en ce que le réseau inséré possède une structure de grenat, de perovskite ou de ferrite.

7. Papier valeur selon la revendication 6, caractérisé en ce que le réseau inséré possède une structure de perovskite correspondant à la formule générale $AXO_3$ où l'on entend par:

A le bismuth et/ou un métal de terre rare; et
X un ou plusieurs métaux de transition absorbants, de préférence le cobalt, le nickel, le manganèse ou le fer.

8. Papier valeur selon la revendication 7, caractérisé en ce que la structure de grenat peut être définie par la formule générale:

$$A_3X_{5-2x}M_xM'_xO_{12}$$

où l'on entend par:

A l'yttrium, le scandium, les lanthanides à l'exception du neodyme, du praseodyme et de leur mélange entre eux ainsi qu'avec du neodyme, du praseodyme, du lanthane et du bismuth;
X un métal du groupe fer, aluminium, gallium et indium;
M un métal du groupe fer, cobalt, nickel, manganèse et zinc;
M' un élément du groupe silicium, germanium, étain et zirconium; et

où l'indice x satisfait à la relation $0 < x \leq 2,5$.

9. Papier valeur selon la revendication 6, caractérisé en ce que la structure de grenat peut être définie par la formule générale:

$$A_{3-x}X_{5-x}B_xM_xO_{12}$$

où l'on entend par:

A l'yttrium, le scandium, les lanthanides à l'exception du neodyme, du praseodyme et de leur mélange entre eux ainsi qu'avec du neodyme, du praseodyme, du lanthane et du bismuth;
B un élément du groupe magnésium, calcium, strontium, baryum, manganèse, zinc et cadmium;
X un métal du groupe fer, aluminium, gallium et indium;
M un élément du groupe silicium, germanium, étain, tellure, zirconium et titane;

et où l'indice x satisfait à la relation $0 < x \leq 3$.

10. Papier valeur selon la revendication 6, caractérisé en ce que la structure de grenat peut être définie par la formule générale:

$$A_3Fe_{5-x}M_xO_{12}$$

où l'on entend par:

- A désigne l'yttrium, le scandium, les lanthanides à l'exception du neodyme, du praseodyme et de leur mélange entre eux ainsi qu'avec du neodyme, du praseodyme, du lanthane et du bismuth;
- M désigne un métal du groupe aluminium, gallium, indium et chrome; et où

l'indice x satisfait à la relation $0 \leq x < 5$.

11. Papier valeur selon la revendication 6, caractérisé en ce que la structure de grenat peut être définie par la formule générale:

$$A_{3-2x}B_{2x}X_{5-x}V_xO_{12}$$

où l'on entend par:

- A l'yttrium, le scandium, les lanthanides à l'exception du neodyme, du praseodyme et de leur mélange entre eux ainsi qu'avec du neodyme, du praseodyme, du lanthane et du bismuth;
- B un élément du groupe magnésium, calcium, strontium et baryum;
- X un élément du groupe aluminium, gallium, indium et fer; et où

l'indice x satisfait à la relation $0 < x \leq 1{,}5$.

12. Papier valeur selon la revendication 6, caractérisé en ce que le réseau inséré possède une structure de ferrite selon la formule générale:

$$M_{1-x}^{2+}M_x'^{3+}Fe_x^{2+}Fe_{2-x}^{3+}O_4$$

où:

- M désigne un ou plusieurs métaux bivalents du groupe indium, cadmium, cobalt, manganèse, fer, nickel, cuivre ou magnésium; et
- M' représente un ou plusieurs lanthanides trivalents (n° atomique 58—71); et

l'indice x peut prendre des valeurs entre 0 et 1.

13. Papier valeur selon une ou plusieurs des revendications précédentes, caractérisé en ce que les substances luminescentes sont prévues sur/dans le papier valeur en étant invisibles dans le domaine visuelle et sur une grande surface.

14. Papier valeur selon une ou plusieurs des revendications précédentes, caractérisé en ce que la substance luminescente produit une luminescence dans le domaine ultraviolet du spectre optique lors d'une activation par une lumière ultraviolette.

15. Papier valeur selon une ou plusieurs des revendications précédentes, caractérisé en ce que la substance luminescente produit une luminescence dans le domaine ultraviolet de spectre optique lors d'une activation par une lumière infrarouge.

16. Procédé de contrôle n'attirant pas l'attention pour un contrôle d'authenticité de papiers valeurs authentifiés avec des substances luminescentes selon la revendication 1 à 15, caractérisé en ce que le papier valeur est activé par une unité d'éclairement avec une lumière du domaine invisible du spectre optique et en ce que la lumière luminescente émise du domaine invisible du spectre optique, est analysée dans une unité de détection en fonction des longueurs d'ondes et/ou du temps du relaxation, en disposant entre l'unité d'éclairement et l'unité de détection d'une part, et le papier valeur d'autre part, une plaque d'apparence opaque qui laisse passer aussi bien la lumière d'activation que la lumière luminescente.

17. Procédé de contrôle selon la revendication 16, caractérisé en ce que, pour l'activation des substances luminescentes, on utilise de la lumière ultraviolette et l'unité de détection analyse seulement la lumière sortant du domaine ultraviolet du spectre optique.

18. Procédé de contrôle selon la revendication 17, caractérisé en ce que, pour l'activation des substances luminescentes, on utilise de la lumière ultraviolette et l'unité de détection analyse seulement la lumière sortant du domaine infrarouge du spectre optique.

19. Procédé de contrôle selon la revendication 16, caractérisé en ce que, pour l'activation des substances luminescentes, on utilise de la lumière infrarouge et l'unité de détection analyse seulement la lumière sortant du domaine ultraviolet du spectre optique.

20. Dispositif pour la mise en oeuvre d'un procédé de contrôle selon les revendications 16 à 19, caractérisé en ce que la plaque opaque ne réfléchit sensiblement pas la lumière visible et lui donne une apparence noire ou approximativement noire.

21. Dispositif selon la revendication 20, caractérisé en ce que la plaque opaque est formée d'un verre de départ dont la raie d'absorption est située hors du domaine visible du spectre optique.

22. Dispositif selon la revendication 20, caractérisé en ce que la plaque opaque est formée d'un verre de Wood.

23. Dispositif selon la revendication 20, caractérisé en ce que la plaque opaque est formée d'une matière dichroïque.

24. Dispositif selon la revendication 20, caractérisé en ce que la plaque opaque est réalisée comme une feuille de matière plastique ou une plaque de matière plastique, qui contient comme charge une matière absorbante appropriée.

25. Dispositif pour la mise en oeuvre d'un procédé de contrôle selon la revendication 16 à 19, caractérisé en ce que la plaque opaque réfléchit fortement, la lumière visible, notament de façon spéculaire.

26. Dispositif selon la revendication 25, caractérisé en ce que la plaque opaque se compose d'une matière semi-conductrice comme du silicium ou du germanium.

27. Dispositif selon la revendication 25, caractérisé en ce que la plaque opaque est un miroir à lumière froide.

28. Dispositif selon la revendication 25, caractérisé en ce que la plaque opaque est un filtre d'interférence.

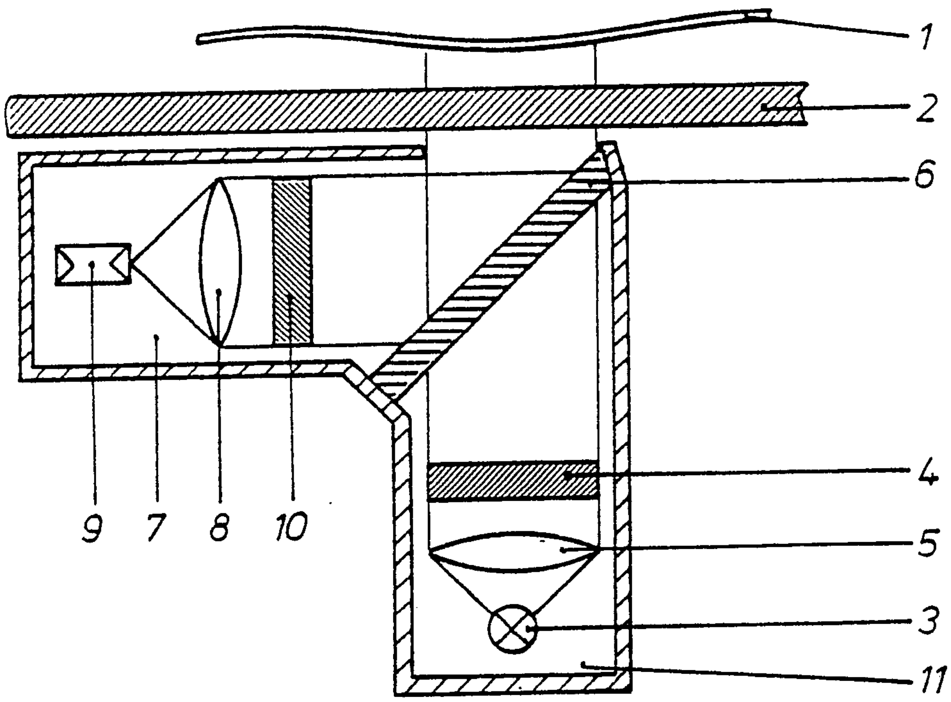


Fig. 1

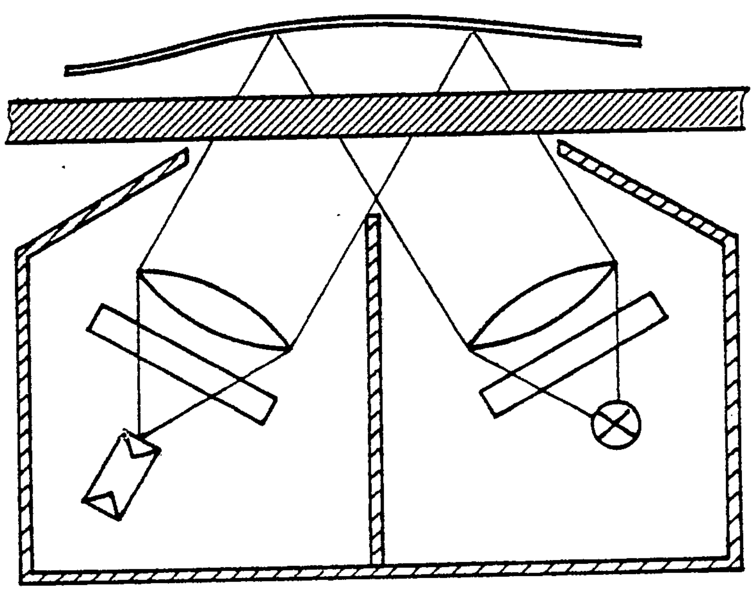

Fig. 2

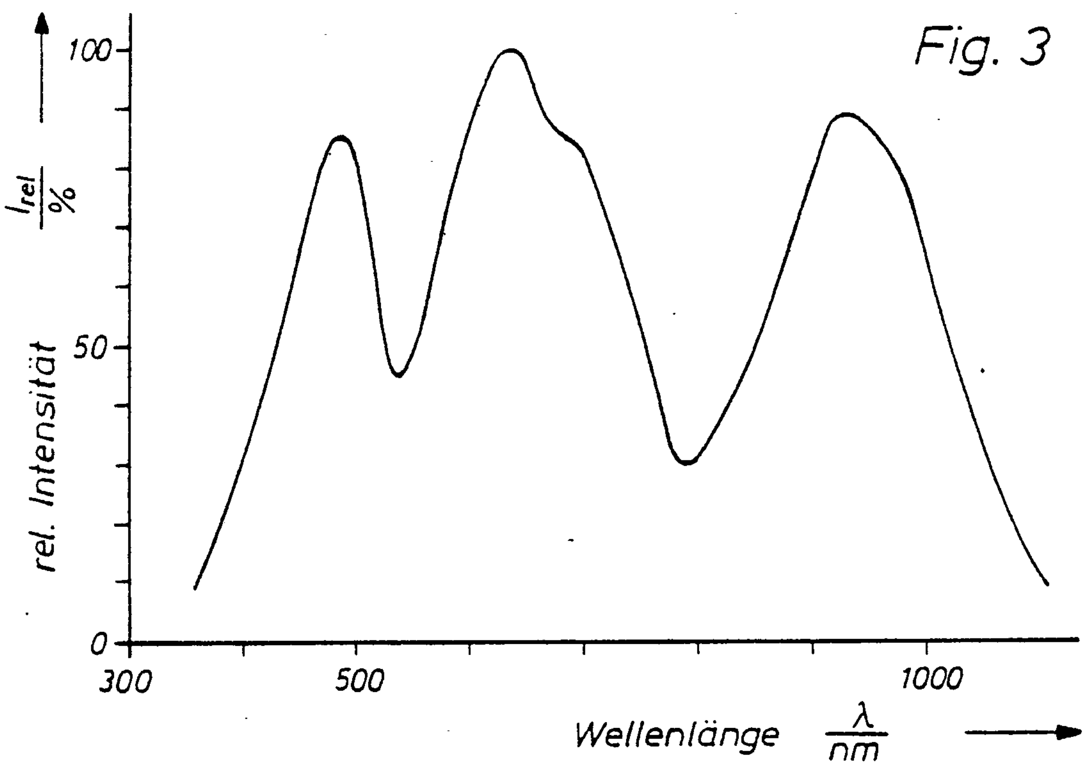
Fig. 3
100
50
0
$I_{rel}$ / %
rel. Intensität
300
500
1000
Wellenlänge λ / nm

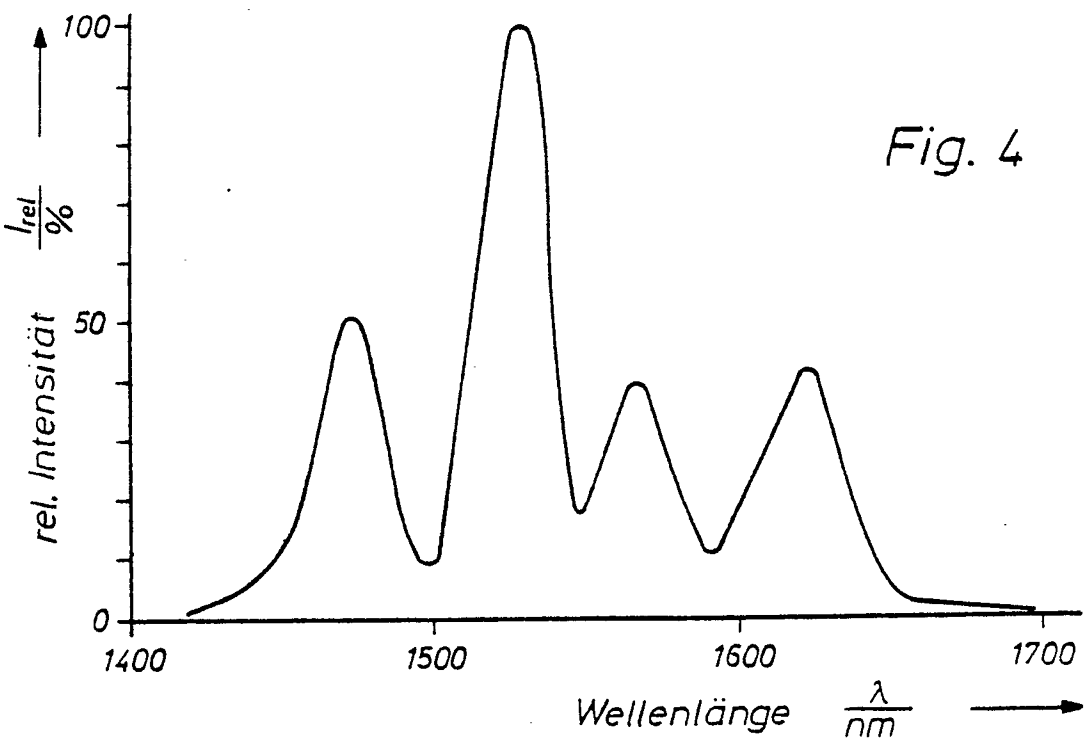
Fig. 4
100
50
0
$I_{rel}$ / %
rel. Intensität
1400
1500
1600
1700
Wellenlänge λ / nm

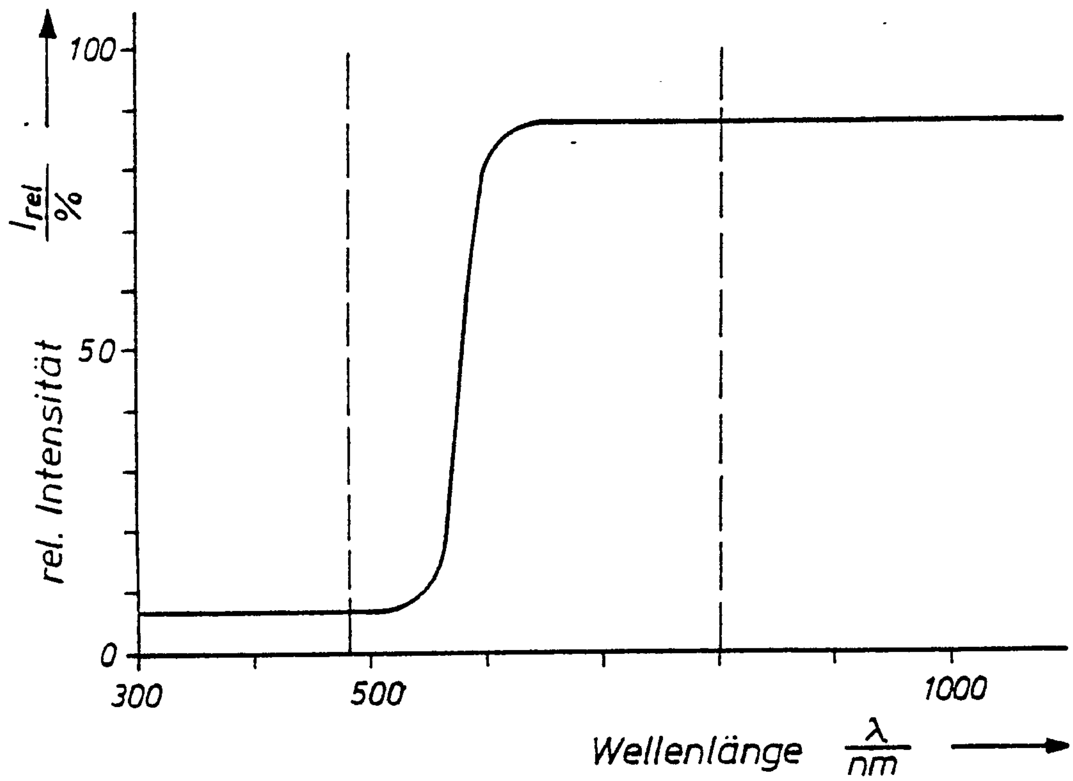
100
50
0
rel. Intensität $\frac{I_{rel}}{\%}$
300
500
1000
Wellenlänge $\frac{\lambda}{nm}$

Fig. 5